# FASCICULE DE BREVET EUROPEEN

(11) **EP 3 526 562 B1**
(45) Date de publication et mention de la délivrance du brevet: **07.06.2023**
(21) Numéro de dépôt: 16802126.9
(22) Date de dépôt: 12.10.2016
(51) Int. Cl.: G01J 3/52, G01J 3/46, A45D 44/00

(54) **SYSTÈME POUR ÉLABORER ET FOURNIR UN PRODUIT D'UNE CERTAINE COULEUR OU TEXTURE CHOISIES PAR UN SUJET ET PRODUIT OBTENU PAR UN TEL SYSTÈME**
SYSTEM ZUR ERZEUGUNG UND BEREITSTELLUNG EINES PRODUKTS MIT EINER VON EINER PERSON AUSGEWÄHLTEN BESTIMMTEN FARBE ODER TEXTUR UND MIT SOLCH EINEM SYSTEM HERGESTELLTES PRODUKT
SYSTEM FOR CREATING AND PROVIDING A PRODUCT OF A CERTAIN COLOUR OR TEXTURE CHOSEN BY A SUBJECT AND PRODUCT PRODUCED BY SUCH A SYSTEM

(43) Date de publication de la demande: 21.08.2019
(73) Titulaire: La Bouche Rouge, 75002 Paris (FR)
(72) Inventeur: GERLIER, Nicolas, 92200 Neuilly sur Seine (FR)
(74) Mandataire: Tranvouez, Edern Morgan
(86) Numéro de dépôt international: PCT/FR2016/052637
(87) Numéro de publication internationale: WO 2018/069581

(56) Documents cités:
- WO-A1-2014/190509
- US-A1- 2015 021 356

## Description

La présente invention concerne un système pour élaborer et foumir un produit d'une certaine couleur ou texture choisies par un sujet, système formé d' un dispositif de visualisation pour montrer un objet à partir duquel un sujet peut choisir ladite couleur ou texture, une palette de couleurs ou de texture parmi lesquelles le sujet peut choisir, d'une liaison vers un centre de fabrication pour élaborer la produit en fonction du choix du sujet.

L'invention est plus particulièrement destinée au choix de la couleur de rouge à lèvres. Les femmes accordent beaucoup de soin à ce choix. Ce choix peut être aidé en utilisant les moyens de communications qui sont proposés, tels que les appareils téléphoniques intelligents mieux connus sous le nom de « smartphone ». Ces appareils sont généralement pourvus d'un appareil photographique ou vidéo qui permet la visualisation pour les personnes qui l'utilisent. On pourra à ce sujet consulter le site suivant :
http://fr.rimmellondon.com/?cid=fr_search_google_

S'il est proposé de choisir facilement une couleur, il est souhaité que la couleur ait une « touche de personnalisation » et qu'elle soit unique ou au moins soit originale pour la personne l'ayant commandée.

Un objet de la présente invention est de proposer un système du genre mentionné dans le préambule qui permet d'obtenir une couleur ou une texture présentant une certaine dose d'originalité ou d'être unique tout en étant proche d'une couleur préalablement choisie.

Pour cela, un tel système est remarquable en ce qu'il comporte un dispositif de modification d'aspect pour modifier la couleur ou la texture choisies par le sujet,

Bien qu'il soit essentiellement mentionné une application concernant les rouges à lèvres, l'invention peut s'appliquer à différents aspects du maquillage, ongles, fards à paupières, etc., plus généralement cosmétiques.

Ainsi grâce à l'invention, ou obtient une couleur ou une texture ; que l'ou peut qualifier d'unique. Ceci peut être signalé au sujet qui a commandé la produit par un certificat garantissant cette unicité.

Cette modification sera de préférence légère pour satisfaire le choix du sujet. La texture peut apparaître aussi dans une autre palette affrétée au choix du brillant ou du mat d'une couleur. L'invention est définie dans la revendication 1. Des modes de réalisation additionnels sont définis dans les revendications dépendantes.

Le document US 2015/021356 A1 divulgue un système pour élaborer et fournir un produit d'une certaine couleur ou texture choisies par un sujet. Le document WO 2014/190509 A1 divulgue un appareil pouvant, sur la base d'une indication de couleur capturée à partir d'un objet réel, appliquer la couleur capturée sur un élément corporel identifié dans une image de synthèse du corps d'un utilisateur.

La description suivante accompagnée des dessins ci-annexés, le tout donné à titre d'exemple non limitatif, fera bien comprendre comment l'invention peut être réalisée. Dans les dessins :
- la figure 1 montre le schéma du système conforme à l'invention,
- la figure 2 montre la commande du dispositif de modification d'aspect,
- la figure 3 montre un premier mode de création de la modification d'aspect,
- la figure 4 montre un deuxième mode de création de la modification d'aspect.

Sur ces figures, les éléments communs portent tous les mêmes réferences sur toutes les figures.

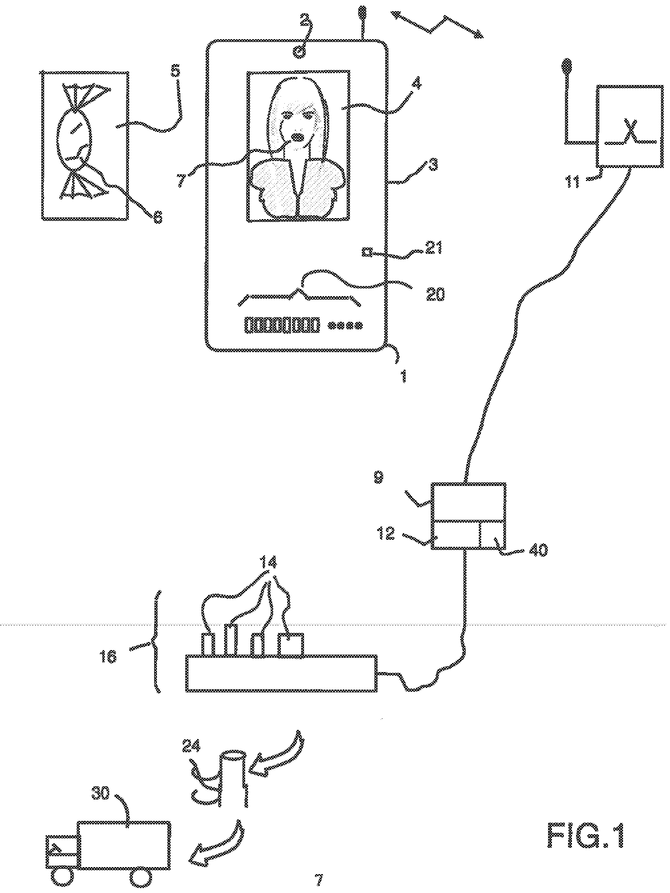

A la figure 1, le système de l'invention est constitué d'un téléphone intelligent (1) muni d'un appareil photographique vidéo (2).

Ce téléphone comporte un écran (3) sur lequel une fenêtre 4 peut apparaître pour la photographie d'un sujet désireux de choisir un rouge à lèvres. Sur cet écran peut apparaître aussi une antre fenêtre (3) montrant un objet (6) photographié par le sujet, à partir duquel il va choisir la couleur ou la texture de son ronge à lèvres à mettre sur ses lèvres (7). Ce téléphone est mis en communication avec un serveur d'application (9) via le réseau Internet (11). Le serveur d'application (9) élabore des commandes au moyen d'un convertisseur de commandes (12) qui fournit l'information de dosage des ingrédients utilisés par un centre de fabrication (16). Ces ingrédients sont contenus dans différents récipients (14) faisant partie du centre de fabrication (16). Des exemples de centres de fabrications qui conviennent à l'invention peuvent se trouver auprès de la société «Chemspeed».

Pour choisir une couleur ou une structure de rouge à lèvres pour ses lèvres (7), le sujet vise un objet (6) qui est représenté sur la fenêtre (5). De cet objet ou détermine une palette (20) qui est rendue visible aussi sur l'écran (3). Le sujet peut ainsi définir la couleur et la structure de son rouge qui s'approche le plus de la couleur de l'objet visé. En appuyant sur une zone (21) de la palette (20) la couleur ou la texture sont validées. Ce choix est illustré par l'apparition de la couleur ou de la structure choisies sur les lèvres (7) de son portrait. Un deuxième appui dans la zone (21) valide le choix final de la couleur ou la structure du rouge et la fabrication du produit (24) est lancée quasi immédiatement.

La palette peut le présenter sous la forme d'un camaïeu de la couleur dominante de l'objet.

Le produit ainsi défini (24) peut alors être livré au sujet sans délai. Ceci est illustré sur la figure 1 par le véhicule (30).

Conformément à l'invention, le système de l'invention comporte un dispositif de modification d'aspect (40) pour modifier la couleur et la texture choisies par le sujet.

Il va de soi que cette modification de couleur doit être légère de façon à ce que le sujet ne se sente pas trahi dans son choix.

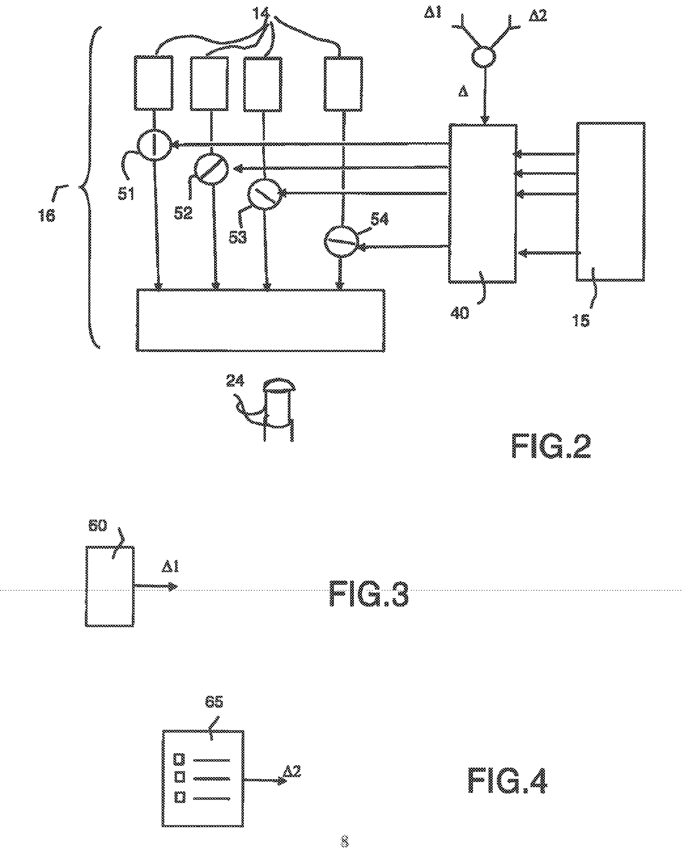

La figure 2 explicite la façon dont les modifications sont appliquées. Différentes vannes (51), (52), (53), (54) règlent le débit des produits contenus dans tes récipients (14). Les commandes de débits agissant sur ces vannes sont issues du dispositif de modification d'aspect (40) recevant, d'une part, les commandes de couleurs que le sujet a établies et, d'autre part, une information de modification Δ.

Ces modifications de couleurs Δ peuvent être elaborées par un générateur de codes aléatoires (60) comme cela est montré à la figure 3 délivrant une modification Δ1 qui peut agir directement sur le dispositif de modification d'aspect.

Il est possible aussi, selon une autre variante de réalisation, d'apporter les modifications de couleurs Δ sur la base d'un questionnaire (65) que l'on envoie au sujet et, en fonction des réponses, on en déduit la valeur Δ2.

Bien entendu ces valeurs de modifications peuvent être combinées ensemble ou agir séparément.

Le fonctionnement du système de l'invention peut être explicité au moyen des étapes suivantes :
Etape 1 - Le sujet utilise son téléphone intelligent et déclenche une application dédiée pour la mise en œuvre de l'invention. Son visage est alors photographié ou filmé et il peut choisir une couleur en visant ou pointer un objet dont la couleur l'intéresse. Cet objet peut être aussi un des vêtements qu'il porte ou alors un bijou, un sac à main etc. De cet objet, ou dérive une palette de préférence un camaïeu qui est rendu visible sur son écran. Il peut alors par un toucher choisir la couleur ou la structure,
Etape 2 - Par une validation, il peut lui être proposé un questionnaire se rapportant de préférence sur son aspect physique (type caucasien, asiatique etc.). Après ce choix une information de fabrication est envoyée au centre de fabrication 16 tenant compte des paramètres de modifications de couleurs et de structure Δ1 et Δ2. La fabrication du produit (24) est aussitôt lancée.
Etape 3 - Après fabrication, le produit (24) est promptement envoyé au sujet qui peut ainsi proposer à des réseaux sociaux la couleur qu'il a choisi.

La présente invention couvre aussi différentes variantes ou applications de l'invention, par exemple le dispositif de visualisation peut être inséré dans une console installée à demeure dans un magasin. Il peut être utilisé aussi un colorimètre pour déterminer la couleur et la structure d'un objet,
Une application importante est la reproduction d'un produit présentant la couleur ou la texture déjà définie par le système de l'invention à partir d'une image présentant une couleur ou une texture issue des réseaux sociaux déjà élaborées antérieurement par un système conforme à l'invention.

## Revendications

1. - Système pour élaborer et fournir un produit (24) d'une certaine couleur ou texture choisies par un sujet, système formé d'un dispositif de visualisation (1) apte à montrer un objet (6) et/ou une palette (20) de couleurs ou de textures dérivées dudit objet (6) à partir desquels ledit sujet peut choisir ladite couleur ou texture, le dispositif de visualisation (1) étant équipé d'une liaison (11) télématique vers un centre de fabrication (16) élaborant le produit en fonction du choix du sujet, ladite liaison (11) télématique étant une liaison de mise en communication du dispositif d'affichage (1) avec un serveur d'application (9) qui élabore des commandes de dosage des ingrédients utilisés par le centre de fabrication (16), **caractérisé en ce que** le système comporte un dispositif de modification d'aspect (40) configuré pour modifier légèrement la couleur ou la texture choisies et validées par le sujet,
dans lequel, le dispositif de modification d'aspect (40) est piloté par un générateur aléatoire (60) et/ou en fonction des réponses à un questionnaire (65) soumis au sujet.

2. - Système selon la revendication 1, **caractérisé en ce que** la fabrication du produit (24) est lancée dès réception des commandes de dosage élaborées par le serveur d'application (9) au moyen d'un convertisseur de commande (12) qui fournit l'information de dosage des ingrédients utilisés par le centre de fabrication (16).

3. - Système selon l'une quelconque des revendications 1 et 2, **caractérisé en ce que** le dispositif de visualisation (1) est pourvu d'un appareil (2) photographique ou vidéo.

4. - Système selon l'une quelconque des revendications 1 à 3, **caractérisé en ce que** la couleur et la structure de l'objet sont déterminées par un colorimètre.

5. - Système selon l'une quelconque des revendications 3 et 4 **caractérisé en ce que** le dispositif de visualisation (1) est constitué par un appareil téléphonique intelligent connecté au réseau Internet (11), muni d'un appareil photographique et vidéo (2) apte à prendre des vues dudit sujet et dudit objet.

6. - Système selon l'une quelconque des revendications 1 à 5 **caractérisé en ce que** le dispositif de visualisation (1) est inséré dans une console.

7. -Système selon l'une quelconque des revendications 1 à 6 **caractérisé en ce que** ledit objet (6) fait partie de l'habillement du sujet y compris accessoires (bijoux, sac à mains, chaussures, etc.) ou de l'environnement du sujet (tableau, objet de décoration ou autres).

8. Système selon l'une quelconque des revendications 5 à 7 **caractérisé en ce que** sa mise en oeuvre est piloté par une application téléchargée sur ledit téléphone intelligent.

## Patentansprüche

1. System zum Erzeugen und Bereitstellen eines Produkts (24) mit einer bestimmten Farbe oder Textur, die von einer Person ausgewählt wurden, wobei das System von einer Visualisierungsvorrichtung (1) gebildet wird, die in der Lage ist, ein Objekt (6) und/oder eine Palette (20) von von dem Objekt (6) abgeleiteten Farben oder Texturen anzuzeigen, auf deren Grundlage die Person die Farbe oder Textur auswählen kann, wobei die Visualisierungsvorrichtung (1) mit einer Telematikverbindung (11) zu einem Fertigungszentrum (16) ausgerüstet ist, welches das Produkt in Abhängigkeit von der Auswahl der Person erzeugt, wobei es sich bei der Telematikverbindung (11) um eine Verbindung zum Inkommunikationbringen der Anzeigevorrichtung (1) mit einem Anwendungsserver (9) handelt, der Befehle zum Dosieren der von dem Fertigungszentrum (16) verwendeten Bestandteile erzeugt,
**dadurch gekennzeichnet, dass** das System eine Vorrichtung (40) zum Modifizieren des Erscheinungsbilds umfasst, die konfiguriert ist, um die Farbe oder die Textur, die von der Person ausgewählt und validiert wurden, leicht zu modifizieren,
wobei die Vorrichtung (40) zum Modifizieren des Erscheinungsbilds von einem Zufallsgenerator (60) und/oder in Abhängigkeit von den Antworten auf einen der Person vorgelegten Fragebogen (65) gesteuert wird.

2. System nach Anspruch 1, **dadurch gekennzeichnet, dass** die Fertigung des Produkts (24) unmittelbar nach Empfang der vom Anwendungsserver (9) erzeugten Dosierungsbefehle mittels eines Befehlsumwandlers (12), der die Informationen zur Dosierung der vom Fertigungszentrum (16) verwendeten Bestandteile bereitstellt, gestartet wird.

3. System nach einem der Ansprüche 1 und 2, **dadurch gekennzeichnet, dass** die Visualisierungsvorrichtung (1) mit einem Foto- oder Videogerät (2) versehen ist.

4. System nach einem der Ansprüche 1 bis 3, **dadurch gekennzeichnet, dass** die Farbe und die Struktur des Objekts durch einen Kolorimeter bestimmt werden.

5. System nach einem der Ansprüche 3 und 4, **dadurch gekennzeichnet, dass** die Visualisierungsvorrichtung (1) aus einem mit dem Internet (11) verbundenen Smartphone besteht, das mit einem Foto- und Videogerät (2) ausgestattet ist, welches in der Lage ist, Ansichten von der Person und dem Objekt aufzunehmen.

6. System nach einem der Ansprüche 1 bis 5, **dadurch gekennzeichnet, dass** die Visualisierungsvorrichtung (1) in eine Konsole eingesetzt ist.

7. System nach einem der Ansprüche 1 bis 6, **dadurch gekennzeichnet, dass** das Objekt (6) Teil der Bekleidung der Person, einschließlich Accessoires (Schmuck, Handtasche, Schuhe, usw.), oder der Umgebung der Person (Bild, Dekorationsobjekt oder sonstiges) ist.

8. System nach einem der Ansprüche 5 bis 7, **dadurch gekennzeichnet, dass** seine Implementierung durch eine Anwendung gesteuert wird, die auf das Smartphone heruntergeladen wurde.

## Claims

1. A system for creating and providing a product (24) of a certain colour or texture chosen by a subject, the system being formed of a viewing device (1) capable of showing an object (6) and/or a palette (20) of colours or textures derived from said object (6) from which said subject can choose said colour or texture, the viewing device (1) being fitted with a telematic connection (11) to a manufacturing centre (16) creating the product as a function of the subject's choice, said telematic connection (11) being a connection for communicating the display device (1) with an application server (9) which creates commands for dosing the ingredients used by the manufacturing centre (16), **characterised in that** the system includes an appearance modification device (40) configured to slightly modify the colour or texture chosen and validated by the subject,
wherein, the appearance modification device (40) is driven by a random generator (60) and/or as a function of answers to a questionnaire (65) submitted to the subject.

2. The system according to claim 1, **characterised in that** the manufacture of the product (24) is started upon receiving the dosing commands created by the application server (9) by means of a command converter (12) which provides information for dosing the ingredients used by the manufacturing centre (16).

3. The system according to any of claims 1 to 2, **characterised in that** the viewing device (1) is provided with a photographic or video camera (2).

4. The system according to any of claims 1 to 3, **characterised in that** the colour and structure of the object are determined by a colourimeter.

5. The system according to any claims 3 to 4, **characterised in that** the viewing device (1) consists of a smartphone connected to the Internet network (11), provided with a photographic and video camera (2) capable of taking views of said subject and said object.

6. The system according to any of claims 1 to 5, **characterised in that** the viewing device (1) is inserted into a console.

7. The system according to any of claims 1 to 6, **characterised in that** said object (6) is part of the subject's clothing including accessories (jewels, handbags, shoes, etc.) or the subject's environment (painting, decoration objects or others).

8. The system according to any of claims 5 to 7, **characterised in that** its implementation is driven by an application downloaded on said smartphone.
